Europäisches Patentamt

European Patent Office

Office européen des brevets

(11) Publication number: **0 580 225 A2**

## EUROPEAN PATENT APPLICATION

(21) Application number: **93202068.8**

(22) Date of filing: **16.07.93**

(51) Int. Cl.5: **H04N 5/44**

(30) Priority: **22.07.92 IT TO920627**

(43) Date of publication of application:
**26.01.94 Bulletin 94/04**

(84) Designated Contracting States:
**DE ES FR GB IT NL PT**

(71) Applicant: **SELECO S.p.A.**
**Viale Treviso, 15**
**I-33170 Pordenone(IT)**

(72) Inventor: **Polo, Andrea**
**via Pedron, 2A**
**I-33170 Pordenone (PN)(IT)**

(74) Representative: **Dini, Roberto, Dr. Ing.**
**Via Castagnole, 59**
**I-10060 None (Torino) (IT)**

(54) Weighted non-linear filter for video signals with compensation for spatial correlations.

(57) The invention refers to a weighted non-linear filter for video signals; the main characteristic of the invention consists in that the filter provides compensation for spatial and temporal correlations by way of a non-linear filter, implemented in order to contrast the law of Weber.

The present invention refers to a non-linear weighted filter for video signals.

It is known that, with the increasing in size and quality of television screens, the typical traditional defects of the PAL television system, with 625 lines, 50 fields at second, interlaced two by two (system commonly abbreviated as 625/50/2:1), become more and more evident and troublesome.

Defects such as the interline twitter, large area flicker, line crawl are unacceptable in an improved quality television system; for improving or however reducing such defects it is necessary to modify the traditional television scansion parameters (interlace ratio, number of lines per field, field frequency). In particular for eliminating the interline twitter it is opportune to adopt a progressive scansion (without interlacing), so as to make invisible the flickering on wide area it is necessary to increase the field frequency (up to 60 or 75Hz), for decreasing the line crawl it is necessary to increase the number of lines per frame (from which improving the vertical resolution).

However the necessity of ensuring complete compatibility with the actual system and the necessitty of the broadcasters to avoid as much as possible modifications to the production and transmission plants in use, in fact they impose improved quality television systems (I.Q.T.V. Improved Quality Television) wherein elaborations of the signals are carried out exclusively in reception.

These facts have given a considerable impulse in the last years to the studies on multidimensional scansion interpolators and converters of television systems; in particular in this context it has been considered the passage from the standard 625/50/2:1 to 625/50/1:1 (P.S.U. Progressive Scan Up-conversion = 625 lines/50 frames/without interlace).

For obtaining a progressive scansion signal from a received interlaced scansion signal 2:1 it is necessary to carry out an interpolation able to supply the missing lines in the received signal, that are then "inserted" between the original lines, thus obtaining a signal with 625 lines per frame, but 50 frames a second (625x50 = line frequency 31250 Hz).

Implementing the interpolation, a degrade being more or less evident is noted in zones of the image wherein consistant movements are present; such degrade is particularly visible in correspondence with the high spatial frequencies and it manifests under the form of blurring. Such effect is due to two causes: the starting signal is not a limited band signal inasmuch it is usually not pre-filtered; the movement of the imagine modifies the spectrum of the signal.

In fact the spectrum of an image, in the presence for example of purely translation motion, has frequency components all contained in an orientated plane in the three dimensional space in a dependent way from the direction and intensity of the motion.

Schematically: for interpolating a new line between two lines of a fixed image it is sufficient to calculate the average of two homologous lines belonging to contiguous field (temporal interpolation or inter-field); if viceversa the image is rapidly variable over time, the missing lines may be obtained from the lines that in the current field are to be found immediately above and below it (vertical interpolation or intra-field). Obviously the temporal interpolation fails as soon as there are variations in the image, while the vertical interpolation is damaging in the presence of vertical transitions.

Fixed interpolation solutions have been proposed in which it has been tried to obtain a fixed filter that offers acceptable performances both on static images and in images with movement (see for example: M. Weston, "Fixed, adaptive and motion compensated interpolation of interlaced TV pictures", BBC RD 1988; A. Biasiro, G.M. Cortelazzo, G.A. Mian, "An interlaced to progressive scan converter for improved PAL systems", ICCE Chicago 1990). One of such solutions provides for example a "raster" vertical-temporal that extends for three fields over time and for five lines in the vertical direction; different weighting coefficients are provided according to the line and the considered field.

Another method consists in the use of a movement detector in order to make adaptive the interpolation using an opportune sum of inter-field and intra-field samples, varying according to the quantity of movement present.

In the Italian patent application N. 67504 A-90 a scansion converter device has been proposed for example for a television signals receiver, for converting the scansion from interlaced to progressive, wherein the combination of a two dimensional linear filter and an image movement detector is provided, with means for adapting the filter, deforming the mask in connection with movement zones of the image, in an analog way to the deformation had from spectrum of the same image in consequence of the movement.

With the known techniques the technical problem is not however solved of transferring information on a high quality monitor (as for example a workstation monitor), keeping the costs within a reasonable amount.

In consideration that for maintaining said costs first of all it is necessary to eliminate the motion detector, the aim of the present invention is therefore that of illustrating a filter for video signals that allows to propose a solution to the aforementioned problem.

For allowing such aims the present invention has for it subject a weighted non-linear filter for video signals, characterisedin that the filter provides compensation for spatial and temporal correlations by way of a non-linear filter, implemented in order to contrast the law of Weber.

Further aims and advantages of the present invention will result in being clear from the detailed description that follows and from the annexed drawings, supplied purely as an explanatory and non-limiting example, wherein:

figure 1 represents in a schematic manner three temporal successive fields, in the vicinity of a point **y** to interpolate;

figure 2 reports the algorithm of the plane filter utilized in the filter according to the invention.

figure 3 reports the filter mask according to the invention.

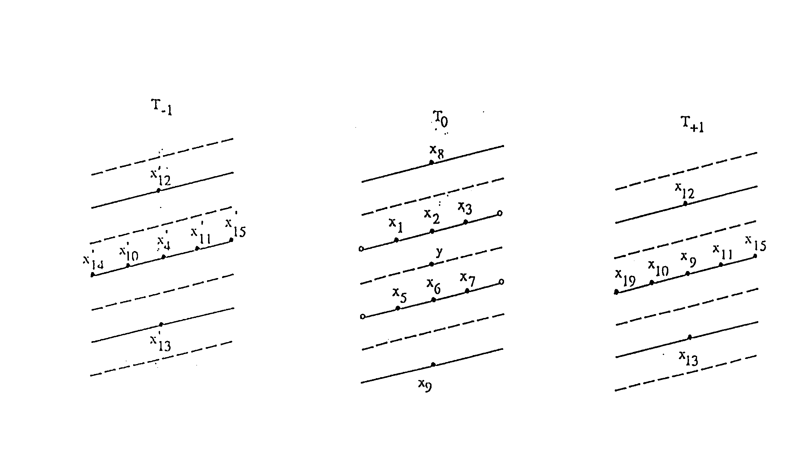

In the left part of figure 1 the situation during the semi-field T-1 is represented; in the central part of figure 1 the situation during the successive semi-field To is represented; in the right part of figure 1 the situation during the field T + 1 is represented.

The felds T-1 and To make up a complete interlaced field; in the three semi-fields the lines actually described by the spot are represented with continuous lines, and with the broken-line the lines to interpolate for the scansion conversion.

Both y the point to interpolate; for replacing the movement detector makes use, according to the invention, of a hierarchical estimator, for evaluing whether the motion is to be considered stationary, medium or fast. We consider the difference in absolute value

$$d = |x_4 - x'_4|$$

between the pixel in question in the semi-field T-1 and the same pixel in the semi-field T + 1.

If **d** is less than (or equal to) a pre determined value R1 the motion is defined as stationary; in that case:

$$\mathbf{y} = x_4 .$$

On the contrary, one defines:

$$d = (|x_{10} - x'_{10}| + |x_{11} - x'_{11}| + |x_{12} - x'_{12}| + |x_{13} - x'_{13}|)/4$$

If **d** is less than (or equal to) a second pre determined value R2, then the motion is defined as medium and in that case:
**y** = plane Filtro
$(x_1, x_2, x_3, x_4, x_5, x_6, x_7, x_8, x_9, x_{10}, x_{11}, x_{12}, x_{13}, x_{14}, x_{12})$
otherwise the motion is defined as fast and:

$$y = (x_2 + x_6)/2 \text{ or } (-x_8 + 9x_2 + 9x_6 - x_9)/16.$$

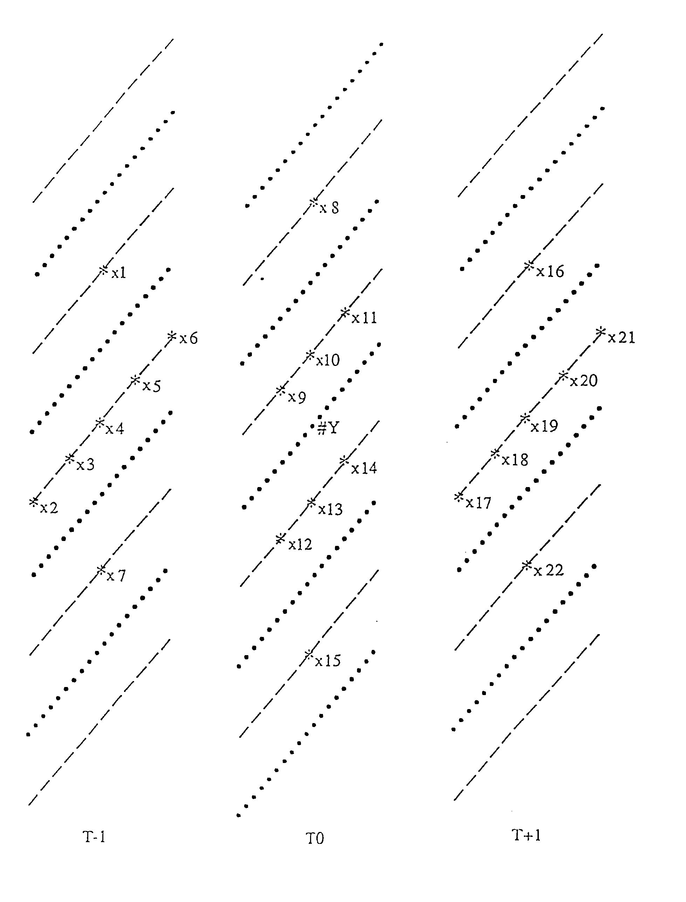

Figure 3 the complete mask of the filter according to the invention is reported.

In the case of figure 3:

$$d = |x_4 - x_{19}|;$$

and also other relations are modified in a similar manner.

The case of medium motion is the most important case; the correction of the medium motion is carried out by means of a plane filter (i.e. executing operations on numerous planes); in other words instead of examining before and after the spatial and temporal correlations are examined.

In the correlation operations the sum of the pixel values along directors on pre-dermined planes are evaluated.

Furthermore the compensation is carried out in order to contrast the law of Weber, that teaches how our eye is more sensible to reading intensity variations if the brightness level is low; for this reason the aforementioned sums are divided for the module of the differences of the same pixels.

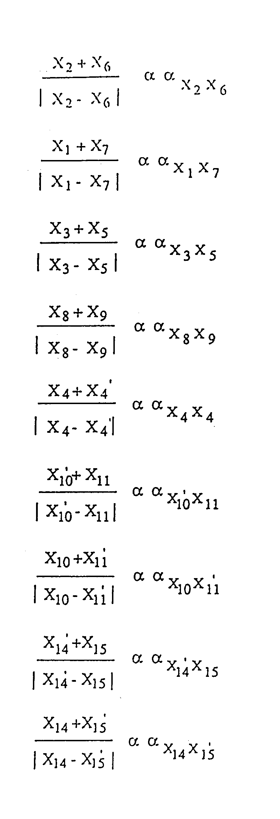

Finally the selected filter is a median type filter; median filters are very resistent with respect noise; in fact the weighting of the coefficients of the filter provides to repeat values for which the correlation measure has the maximum value. In mathematical terms the algorithm of the plane filter utilized in the filter according to the invention is reported in Figure 2.

The alpha coefficient is an entire coefficient; the $alfa_{tu}$ coefficients are weighting coefficients proportional to the ratios $(t + u)/(|t-u|)$; if
$(t + u)/(|t-u|)$ has the maximum value, is given by:
$alfa_{tu} = 3$ and other alpha being equal to 1; then:
$y = med(alfa_{x2x6}\S(x_2 + x_6)/2...)$ where § is the repetition operator. The tests have been carried out according to the mask of figure 3 and giving R1 = 8 and R2 = 32.

The characteristics of the filter subject of the invention are clear from the description of the example.

From the given description the advantages of the filter subject of the present invention are also clear.

In particular they consist in that:
- the median filter is very resistent with respect noise (additive, gaussian, impulsive, ecc.);
- the median filter is very powerful in conserving fronts and details present in the image; this characteristic depends on the form of the mask of the median filter and on direction of such fronts; for eliminating such dependency the spatial and tempoaral correlation measures have been resorted to by way of a plane filter that compensates the median filter with weighing operations of its terms;

- the computational complexity of such filters is very limited and thus allows for cheap realization.

It is clear that numerous variations are possible by the skilled-man, to the filter described by way of example, without departing from the novelty principles inherent in the invention.

## Claims

1. Weighted non-linear filter for video signals, characterised in that the filter provides compensation for spatial and temporal correlations by way of a non-linear filter, implemented in order to contrast the law of Weber.

2. Non-linear filter, according to claim 1, characterised in that makes use of a hierarchical estimator for evaluating whether the motion is to be considered stationary, medium or fast.

3. Non-linear filter, according to claim 2, characterised in that, in the case of medium motion, said filter is a median filter that provides a compensation based on the law of Weber and spatial and temporal correlations by way of a plane filter.

4. Non-linear filter, according to claim 3, characterised in that the weighting of the coefficients of the filter provides for repeating values for which the correlation measure has the maximum value.

5. Non-linear filter, according to claim 3, characterised in that in the correlation operations a non-linear effect based on the law of Weber is considered.

6. Non-linear filter, according to claim 4, characterised in that in the correlation operations the sum of pixel values along directors that are on pre determined planes is evaluated and that said sum is divided for the module of the differences of the pixel values.

$$\frac{X_2 + X_6}{|X_2 - X_6|} \quad \alpha \; \alpha_{X_2 X_6}$$

$$\frac{X_1 + X_7}{|X_1 - X_7|} \quad \alpha \; \alpha_{X_1 X_7}$$

$$\frac{X_3 + X_5}{|X_3 - X_5|} \quad \alpha \; \alpha_{X_3 X_5}$$

$$\frac{X_8 + X_9}{|X_8 - X_9|} \quad \alpha \; \alpha_{X_8 X_9}$$

$$\frac{X_4 + X_4'}{|X_4 - X_4'|} \quad \alpha \; \alpha_{X_4 X_4}$$

$$\frac{X_{10}' + X_{11}}{|X_{10}' - X_{11}|} \quad \alpha \; \alpha_{X_{10}' X_{11}}$$

$$\frac{X_{10} + X_{11}'}{|X_{10} - X_{11}'|} \quad \alpha \; \alpha_{X_{10} X_{11}'}$$

$$\frac{X_{14}' + X_{15}}{|X_{14}' - X_{15}|} \quad \alpha \; \alpha_{X_{14}' X_{15}}$$

$$\frac{X_{14} + X_{15}'}{|X_{14} - X_{15}'|} \quad \alpha \; \alpha_{X_{14} X_{15}'}$$

x1

x6

x5

x4

x3

x2

x7

x8

x11

x10

x9

#Y

x14

x13

x12

x15

x16

x21

x20

x19

x18

x17

x22

T-1

T0

T+1